# EUROPEAN PATENT SPECIFICATION

(11) **EP 3 707 215 B1**
(45) Date of publication and mention of the grant of the patent: **25.06.2025**
(21) Application number: 18822260.8
(22) Date of filing: 05.11.2018
(51) Int. Cl.: C09H 3/00, A23J 1/10, A23J 1/00, A23J 3/06, A23J 3/34, C08L 89/06

(54) **BIOTECHNOLOGY-BASED PRODUCTION OF FOOD GELATINE FROM POULTRY BY-PRODUCTS**
BIOTECHNOLOGISCHE HERSTELLUNG VON NAHRUNGSMITTELGELATINE AUS GEFLÜGELPRODUKTEN
PRODUCTION BIOTECHNOLOGIQUE DE GÉLATINE ALIMENTAIRE À PARTIR DE SOUS-PRODUITS DE VOLAILLE

(30) Priority: 09.11.2017 CZ 20170722
(43) Date of publication of application: 16.09.2020
(73) Proprietor: Tomas Bata University In Zlín, 76001 Zlín (CZ)
(72) Inventor: MOKREJS, Pavel, CZ-76005 Zlin (CZ); GAL, Robert, CZ-69684 Temice (CZ); MRAZEK,Petr, CZ-76502 Otrokovice (CZ)
(74) Representative: Kreizlova, Dana
(86) International application number: PCT/CZ2018/050054
(87) International publication number: WO 2019/091502

(56) References cited:
- WO-A1-2015/002622
- WO-A2-02/072723
- CZ-B6- 305 300
- CZ-B6- 307 331
- GB-A- 2 207 137
- US-A- 5 138 030
- LIU D.C. ET AL: "Optimum Condition of Extracting Collagen from Chicken Feet and its Characteristics", 1 January 2001 (2001-01-01), pages 1638 - 1644, XP055915075, Retrieved from the Internet <URL:https://www.animbiosci.org/upload/pdf/14-246.pdf> [retrieved on 20220425]
- ASHOK KUMAR CHAKKA ET AL: "Poultry Processing Waste as an Alternative Source for Mammalian Gelatin: Extraction and Characterization of Gelatin from Chicken Feet Using Food Grade Acids", WASTE AND BIOMASS VALORIZATION, vol. 8, no. 8, 1 November 2016 (2016-11-01), NL, pages 2583 - 2593, XP055566886, ISSN: 1877-2641, DOI: 10.1007/s12649-016-9756-1
- GRESER E: "Preparation of poultry gelatin", FSTA, 1 January 1970 (1970-01-01), XP002213230

## Description

### The technology in question

The invention described herein is a biotechnological method for producing food-grade gelatine from slaughterhouse poultry waste - particularly poultry feet.

### Current state of the art

Gelatine is a product derived from the cleavage of collagen, obtained by extraction from collagen feedstock - such as bones, cowhide and porcine skin. The raw base material is characterized by a high degree of cross-linking, which requires pre-treatment of the feedstock, resulting in the rupture of inter cross-links and the consequent extraction of gelatine through the use of water. The process is conducted at low or high pH values; in the case of A-type gelatine, an acidic environment is utilized (pH 1.5-3.0), while B-type gelatine pertains to an alkaline environment (pH 12.0). The acidic method is suitable for treating porcine skin, the time of processing usually totalling 18 to 30 hours. The alkaline method is primarily applicable for cowhide and the standard time of treatment is 2-3 months, but it can be up to 6 months. After a thorough rinse in cold water, the pre-treated feedstock is subjected to extraction by hot water, 50 to 100 °C. After filtration, the resulting gelatine solution is subjected to other operations - deionization, concentration, sterilization and moulding into the final shape.

A generally similar technology is applied to produce fish-derived gelatine, wherein skin and bones are the raw base materials; the processing of the raw base material is usually carried out in an acidic environment.

In addition to waste stemming from cows, pigs and fish, waste from poultry slaughterhouses is indicated as a prospective source of gelatine, especially in consideration of individuals and communities that do not consume products linked with beef or pork, e.g. religious non-consumption of beef in India, and rejection of pork in accordance with Islamic and Jewish beliefs. Moreover, supplementing a dish labelled as "chicken" with beef-derived gelatine could cause issues with acceptance of such a product by customers, whereas a chicken burger containing chicken-derived gelatine would comprise 100% chicken. Hence, the potential exists for application of the technology in the manufacture of generic products in the food industry.

Methods have been devised for producing gelatine from items such as the skin, heads or lower parts of the feet of chickens. These processes usually involve the separation of fats and non-collagenous proteins, enzyme-based pre-treatment and gelatine extraction, separation of the gelatine solution and processing the same into gelatine. While these have proven effective, they still fail to provide a yield of gelatine corresponding to the potential of the feedstock. In addition, such existing technologies are not sufficiently optimized in terms of the various steps necessary.

Indeed, any optimization of such a process tends to be implemented to source special types of gelatine, an example being a method for processing poultry feet under international application of PCT ref. no. WO2017050775 for sourcing pharmacologically applicable gelatine by anti-hypertensive activity.

Besides above techniques processing mostly various kinds of gelatine there were several methods disclosed which work exclusively with poultry waste, for example the article ASHOK KUMAR CHAKKA ET AL: "Poultry Processing Waste as an Alternative Source for Mammalian Gelatin: Extraction and Characterization of Gelatin from Chicken Feet Using Food Grade Acids", the document WO 2015/002622, the patent CZ 307 331, the article Liu O.C. ET AL: "Optimum Condition of Extracting Collagen from Chicken Feet and its Characteristics".

The said methods need to use any stronger chemicals of either acid or alkali nature, for example with pH 2.4 - 5.2 or 10.0 - 11.0. It results in considerable environmental drawbacks as well as significant cost increasing, not only for chemicals as such but also for the water consumption for washing out them from the resulting gelatine product. Despite of this drawback, these methods do not bring any substantial increasing of yield of gelatine compared with common technologies. As disclosed, their yields are mostly in range 6.0 - 30.0 %.

### The essence of the invention

The biotechnological method for producing food-grade gelatine from poultry waste, especially poultry feet - described as the invention - eliminates to a large extent the above-mentioned hurdle of insufficient yield inherent in present methodologies for gelatine production.

In essence, the invention consists of a gradual process for treating slaughterhouse waste, i.e.
(a) being rinsed with water, and then super-cooled to a temperature of 0 to +5 °C or deep-frozen to a temperature of -36±2 °C for storage at -20±2 °C;
(b) subsequent pre-freezing or adjustment of this being the temperature in the core of the feedstock to -2 to -5 °C;
(c) mincing the feedstock in two stages - firstly to obtain pieces of 20-30 mm in stage 1 and then of up to 3 mm in stage 2;
(d) intense separation of non-collagenous proteins and pigments from the minced feedstock by washing out the material with NaOH solution of concentration 0.08 to 0.15% (w/w), and subsequent shaking for 30 to 50 minutes of the material at room temperature, with 3 to 5 cycles of the same;
(e) subsequent separation of fat by extraction with a mixture of solvents solvents ethanol + petroleum ether mixed to obtain the volume ratio of 1:2 to 2:1, during which the material is shaken at room temperature for a period of up to 72 hours; the solvent mixture is periodically replaced at 6, 24 and 48 hours;
(f) pre-treatment of the protein isolate by a proteolytic enzyme with a dosage 0.3% to 0.6% by shaking the material for 15 to 25 hours in an aqueous medium at pH 7.5±0.3 at room temperature;
(g) filtering out the protein hydrolysate and rinsing the swollen protein isolate with water;
(h) extracting the gelatine(s) - the first stage; this involves mixing the swollen protein isolate with water to obtain the ratio of 1:7 to 1:10 w/w; extraction follows, at a temperature of 50 to 60 °C during mixing of the material for 40 to 60 minutes;
(i) inactivating the remnants of the proteolytic enzyme, by bringing the mixture to the boil and boiling it for 4 to 8 minutes;
(j) separating the gelatine solution from the remaining, undecomposed fraction of the protein isolate by filtration,
(k) extracting the gelatine(s) - the second stage; multi-level extraction of the same from the swollen protein isolate, with the temperature increasing at each level; the range of increase is from 60 to 100 °C;
(l) formation of gelatine(s) from the extracted solutions, and biotechnological processing of the remaining, undecomposed fraction to produce hydrolysed collagen.

The rinsed waste obtained in step (a) above or the minced feedstock obtained in step (c) above is advantageously super-cooled to a temperature of 0 to 5 °C for a period of storage of up to 36 hours, or is flash-frozen at a temperature of -36±2 °C for a period of storage of up to 24 months at -20±2 °C.

Multi-level extraction of the gelatin or gelatines, step (k), may be carried out profitably at 3 stages: stage 1 at 60 °C; stage 2 at 80 °C or below - for provision of a solution; and stage 3 at 95 to 100 °C or below - for provision of a solution.

The contribution of the method described as the invention consists of using secondary raw collagen material that is generated when slaughtering poultry; currently, such material has only been utilized to a minimal degree. Processing the feedstock to produce gelatine benefits the producer and/or processing entity through the following: permitting greater economy by harnessing the value of the raw material; the potential to broaden the assortment of products; and environmental aspects.

The method for processing chicken feet into gelatine according to the invention could be described as zero-waste technology for the following reasons:
(a) any fraction of fat in the feedstock extracted by the organic solvents can be employed later - after the solvents have been eliminated by distillation - in various industrial applications, e.g. as an additive in feedstuffs and in the production of second-generation biofuel or soap;
(b) any liquid fraction eliminated following the enzyme-based pre-treatment of the raw material contains some extent of the hydrolysed protein; for example, this protein hydrolysate is applicable in the production of food or feedstuffs;
(c) any solid fraction remaining after gelatine extraction can undergo further processing via biotechnological means into collagen hydrolysate - with an added proteolytic enzyme - or be used as an additive to enrich feedstuffs with proteins;
(d) waste waters may be processed in wastewater treatment plants without difficulty.

The biotechnological enzyme-based procedure for pre-treating the raw base material is innovative, since most feedstock currently undergoes pre-treatment in acid or alkaline environments prior to extraction, as is the case of type A/B gelatine(s). No enzyme-based method for pre-treating a raw base material is presently employed in the real world. The new method described herein for enzyme-based, technological processing of the raw base material is superior in the following aspects:
(a) economy - the process takes place under atmospheric pressure and moderate ambient temperatures and pH, is carried out in a very short time, compared with B-type gelatine, and consumes small amounts of enzyme;
(b) ecology - the enzymes used are food-grade enzymes, so do not possess the environmental impact associated with acids or alkalis; significantly less water is consumed when washing the feedstock after pre-treatment of the same; moreover, this action of washing out residues of the enzyme does not require as much water as the same action for acids or alkalis.

Clearly, a benefit of the invention is optimization of a method to produce a new type of gelatine. As previously stated, gelatine of cow and porcine origin is currently available commercially, as is fish-derived gelatine. Introducing chicken-derived gelatine could be beneficial for the following reasons:
(a) it would prove suitable for individuals that do not consume products of beef or pork; e.g. due to religious beliefs - non-consumption of beef in India or the rejection of pork in Islamic and Jewish teachings;
(b) it would be possible to produce certain single-species products; indeed, adding beef gelatine into a dish labelled as "chicken" may not adhere with food inspection regulations; for instance, should a chicken burger be supplemented with chicken gelatine, it would be considered a product of 100% chicken.

### An example of accomplishment of the invention

Preparing the base feedstock, i.e. grinding it for the desired soft structure, to enable further biotechnological processing is a crucial step in the methodology. The standout feature of this invention is its requirement for conditions that prevent any denaturation of the collagen protein while also ensuring that the collagen transforms into gelatine with optimal efficiency as part of the biotechnological process, ultimately giving rise to the preparation of high-quality gelatine.

Adhering to fundamental conditions for health when sourcing the poultry feet constituted the primary pre-requisite for obtaining a good-quality food product free of any risk to health, i.e. poultry-derived gelatine. In this regard, washing the feedstock in water immediately after separation of the feet is important. In slaughterhouse operations, processing poultry involves transporting the feet through a system of flushing and cleaning pipes, wherein primary cleaning takes place concurrently with the required cooling of this valuable raw material.

The resultant material is only placed in containers once it has been purified and any excess water has dripped off. If the final product, gelatine, is intended for use by the food sector, the storage containers need to be placed in refrigerated premises to avoid any negative microbial propagation and decline in the value of the feedstock. The period of storage of the feet after slaughter is recommended for a maximum of 36 hours at the optimum temperature of 0 to 5 °C, or for longer periods of storage at -20±2 °C once deep-frozen at a temperature of -36±2 °C.

Homogenization and grinding of the entire batch of poultry feet must be done as quickly as possible after extraction from the slaughter process, while ensuring the temperature in the refrigerated storage chain remains between 0 to 5 °C. Prior to such homogenization, it is recommended that the feedstock is slightly pre-frozen to a temperature between -2 and -5 °C, as measured in the core of the feedstock. Such a temperature ensures the stability of the collagen obtained subsequently.

Both the first and second stage of mincing utilized standard heavy-duty industrial meat choppers. The first stage of mincing involved the use of a cutting plate with a four-arm blade; the plate contained 20-30 mm, kidney-shaped holes. The second stage of mincing employed the same type of meat chopper, but this time fitted with a cutting panel of 3 mm holes and the same four-arm blades. When mincing, the temperature of the feedstock rises; note that it must not exceed 12 °C during this operation. However, if adhering to the above-mentioned procedure of mincing in two stages, an increase in the temperature of the final feedstock to approximately 0 to 3 °C is realistic. If the processed feedstock is not to be further manipulated within a maximum of 24 hours, said homogenized material has to be vacuum packed in packages wrapped with wrap of a minimum wall thickness of 80 µm suitable for storage at low temperatures. The packed feedstock is then deep-frozen at -36±2°C. This raw material can then be stored in freezers at -20±2 °C for up to a period of 24 months.

The solids inherent to a poultry foot contain approximately 35% fat, which end up distributed throughout the feedstock. Such feet also possess soluble proteins and pigments. Before commencing the procedure for extracting gelatine, any parts associated with said contents have to be removed to prevent issues during processing and ensure there is no decrease in the quality of the resultant gelatine.

Non-collagenous proteins and pigments were removed by mixing the feedstock with a solution of 0.1% NaOH at a ratio of 1:8, which was shaken for 45 minutes at room temperature. Upon filtration and washing the same with water, the procedure was repeated another three times.

After mechanical draining, the feedstock was mixed with a mixture of solvents - ethanol and petroleum ether (1:1); the material to solvent ratio equalled 1:6. Afterwards, the mixture was shaken for 72 hours at room temperature. Notably, at 6, 24 and 48 hours, the mixture of solvents was filtered out and replaced with a new supply. Subsequent to this technological step was another for the isolate of the collagenous protein.

Pre-treating the feedstock prior to extracting the gelatine(s) involved mixing the isolate of the collagenous protein with water, the weight ratio for this being 1:9. The pH of the mixture was adjusted to a value corresponding to the maximum efficiency of the proteolytic enzyme used; herein, the pH was 7.5±0.3. Addition of 0.4% proteolytic enzyme relative to the portion of the isolate of the collagenous protein then occurred, and the mixture was shaken for 20 hours at room temperature. Afterwards, the liquid fraction, hydrolysate, was filtered out, and the swollen isolate of the collagenous protein was rinsed with water.

The first stage of gelatine extraction required mixing the swollen isolate of the collagenous protein with water at a weight ratio of 1:9. Then the mixture was stirred using a shaft stirrer, warmed to 50 to 60 °C and extracted for 50 minutes after reaching the desired temperature. Afterwards, the mixture was warmed again, this time to 100 °C, and this temperature was maintained for 5 minutes to inactivate the enzyme.

The gelatine solution was filtered out and subjected to other standard operations employed in the industrial production of gelatine, see below.

In order to ensure maximum utilization of the input feedstock (the swollen collagenous protein isolate), the next stages of multi-level gelatine extraction were carried out: second stage of extraction at 70 to 80 °C; and third stage of extraction at 90 to 100 °C. This procedure of three-level extraction led to the preparation of high-quality gelatine(s) after first and second stages of the extractions; and lower-quality gelatine after third stage of the extraction. The quantity of the remaining solid fraction after the last (third) stage of the multi-level extraction process was minimal.

The solid fraction that remained after the last stage of extraction was applied to prepare a collagenous hydrolysate via biotechnological processing.

The gelatine solutions obtained at each level of extraction were subjected to standard technological operations employed to make type A/B gelatine(s), e.g. obtaining correct concentration, sterilizing and/or bleaching, and moulding the final shape. The latter made use of:
(a) a technique for super-cooling the gelatine solution in the form of a gel and subsequent extrusion of the same to make so-called gelatine noodles, which were then gently dried and, finally, ground to the mesh size required; or, alternatively,
(b) a technique for direct drying the gelatine solution cast in a mould, i.e. the exact same procedure for producing gelatine leaves in industry.

### Industrial application

The methodology for production described herein as the invention is applicable in sourcing food-grade gelatine from slaughterhouse poultry waste - particularly poultry feet. The technique is optimized to increase the value of the feedstock more effectively, since the yield of gelatine corresponds better to the potential of the feedstock than is the case for existing technologies and could be described as zero-waste technology.

## Claims

1. A biotechnological procedure for producing a gelatine suitable for foodstuffs sourced from slaughterhouse poultry waste, particularly the feet of poultry; the sub-steps included involve separation of fat, separation of non-collagenous proteins, enzyme-based pre-treatment and gelatine extraction, separation of the gelatine solution and the processing the same into gelatine. Said process is **characterized by** the slaughterhouse waste gradually undergoing the following:
(a) being rinsed with water, and then super-cooled to a temperature of 0 to +5 °C or deep-frozen to a temperature of -36±2 °C for storage at -20±2 °C;
(b) subsequent pre-freezing or adjustment of this being the temperature in the core of the feedstock to -2 to -5 °C;
(c) mincing the feedstock in two stages - firstly to obtain pieces of 20-30 mm in stage 1 and then of up to 3 mm in stage 2;
(d) intense separation of non-collagenous proteins and pigments from the minced feedstock by washing out the material with NaOH solution of concentration 0.08 to 0.15% (w/w), and subsequent shaking for 30 to 50 minutes of the material at room temperature, with 3 to 5 cycles of the same;
(e) subsequent separation of fat by extraction with a mixture of solvents ethanol + petroleum ether mixed to obtain the volume ratio of 1:2 to 2:1, during which the material is shaken at room temperature for a period of up to 72 hours; the solvent mixture is periodically replaced at 6, 24 and 48 hours;
(f) pre-treatment of the protein isolate by a proteolytic enzyme with a dosage 0.3% to 0.6% by shaking the material for 15 to 25 hours in an aqueous medium at pH 7.5 ± 0.3 at room temperature;
(g) filtering out the protein hydrolysate and rinsing the swollen protein isolate with water;
(h) extracting the gelatine(s) - the first stage; this involves mixing the swollen protein isolate with water to obtain the ratio of 1:7 to 1:10 w/w; extraction follows, at a temperature of 50 to 60 °C during mixing of the material for 40 to 60 minutes;
(i) inactivating the remnants of the proteolytic enzyme, by bringing the mixture to the boil and boiling it for 4 to 8 minutes;
(j) separating the gelatine solution from the remaining, undecomposed fraction of the protein isolate by filtration;
(k) extracting the gelatine(s) - the second stage; multi-level extraction of the same from the swollen protein isolate, with the temperature increasing at each level; the range of increase is from 60 to 100 °C;
(l) formation of gelatine(s) from the extracted solutions, and biotechnological processing of the remaining, undecomposed fraction to produce hydrolysed collagen.

2. A biotechnological method for producing food-grade gelatine under Claim 1, **characterized by** super-cooling rinsed slaughterhouse waste obtained in step (a) above or minced feedstock obtained in step (c) above to a temperature of 0 to 5 °C for a period of storage of up to 36 hours.

3. A biotechnological method for producing food-grade gelatine under Claim 1, **characterized by** flash-freezing rinsed slaughterhouse waste obtained in step (a) above or minced feedstock obtained in step (c) above to a temperature of -36±2 °C, storing it for up to 24 months at -20±2 °C.

4. A biotechnological method for producing food-grade gelatine under Claim 1, **characterized by** a multi-level process for extracting gelatin or gelatines conducted as part of step k of claim 1 wherein three levels are involved: the first at 60 °C or below; the second at 80 °C or below to provide solutions; and the last at 95 to 100 °C to provide a solution.

## Patentansprüche

1. Ein biotechnologisches Verfahren zur Herstellung einer für Lebensmittel geeigneten Gelatine, die aus Geflügelabfällen des Schlachthofs, insbesondere aus Geflügelfüßen, wobei die Teilschritte die Abtrennung des Fetts, die Abtrennung der nicht kollagenen Proteine, die enzymatische Vorbehandlung und die Gelatineextraktion, die Abtrennung der Gelatinelösung und deren Verarbeitung zu Gelatine umfassen; das Verfahren ist **dadurch gekennzeichnet, dass** die Schlachtabfälle nach und nach den folgenden Schritten unterzogen werden:
a) mit Wasser gespült und anschließend auf eine Temperatur von 0 bis +5 °C unterkühlt oder auf eine Temperatur von -36 ± 2 °C tiefgefroren und bei -20 ± 2 °C gelagert werden;
b) anschließendes Vorgefrieren oder Einstellen der Temperatur im Kern des Ausgangsmaterials auf -2 bis -5° C;
c) Zerkleinerung des Ausgangsmaterials in zwei Stufen - zunächst zur Gewinnung von Stücken von 20-30 mm in Stufe 1 und dann bis zu 3 mm in Stufe 2;
d) intensive Abtrennung der nicht kollagenen Proteine und Pigmente aus dem zerkleinerten Ausgangsmaterial durch Auswaschen des Materials mit einer NaOH-Lösung der Konzentration 0,08 bis 0,15 % (w/w) und anschließendes Schütteln des Materials für 30 bis 50 Minuten bei Raumtemperatur mit 3 bis 5 Zyklen desselben
e) anschließende Abtrennung des Fetts durch Extraktion mit einem Lösungsmittelgemisch aus Ethanol + Petrolether gemischt, um ein Volumenverhältnis von 1:2 bis 2: 1 zu erhalten, wobei das Material bei Raumtemperatur bis zu 72 Stunden lang geschüttelt wird; das Lösungsmittelgemisch wird regelmäßig nach 6, 24 und 48 Stunden ausgetauscht
f) Vorbehandlung des Proteinisolats mit einem proteolytischen Enzym in einer Dosierung von 0,3% bis 0,6% durch 15- bis 25-stündiges Schütteln des Materials in einem wässrigen Medium mit einem pH-Wert von 7,5 ± 0,3 bei Raumtemperatur;
g) Herausfiltern des Proteinhydrolysats und Spülen des gequollenen Proteinisolats mit Wasser;
h) Extraktion der Gelatine(n) - erste Stufe; dabei wird das gequollene Proteinisolat mit Wasser gemischt, um ein Verhältnis von 1:7 bis 1:10 (w/w) zu erhalten; anschließend erfolgt die Extraktion bei einer Temperatur von 50 bis 60 °C während des Mischens des Materials für 40 bis 60 Minuten;
i) Inaktivierung der Reste des proteolytischen Enzyms, indem die Mischung zum gebracht und 4 bis 8 Minuten lang gekocht wird;
j) Abtrennung der Gelatinelösung von der verbleibenden, nicht zersetzten Fraktion des Proteinisolats durch Filtration;
k) Extraktion der Gelatine(n) - zweite Stufe; mehrstufige Extraktion derselben aus dem gequollenen Proteinisolat, wobei die Temperatur auf jeder Stufe erhöht wird; der Bereich der Erhöhung liegt zwischen 60 und 100° C;
l) Bildung von Gelatine(n) aus den extrahierten Lösungen und biotechnologische Verarbeitung der verbleibenden, nicht zersetzten Fraktion zur Herstellung von hydrolysiertem Kollagen.

2. Biotechnologisches Verfahren zur Herstellung von Gelatine in Lebensmittelqualität nach dem Anspruch 1, **gekennzeichnet durch** Unterkühlung von gespültem Schlachthofabfall, der in Schritt (a) erhalten wurde, oder von zerkleinertem Ausgangsmaterial, das in Schritt (c) erhalten wurde, auf eine Temperatur von 0 bis 5°C für eine Lagerzeit von bis zu 36 Stunden.

3. Biotechnologisches Verfahren zur Herstellung von Gelatine in Lebensmittelqualität nach Anspruch 1, **gekennzeichnet durch** Schnellgefrieren von gespültem Schlachthofabfall, der in Schritt (a) erhalten wurde, oder von zerkleinertem Ausgangsmaterial, das in Schritt (c) erhalten wurde, auf eine Temperatur von -36 ± 2 °C, Lagern für bis zu 24 Monate bei -20 ± 2 °C.

4. Biotechnologisches Verfahren zur Herstellung von Gelatine in Lebensmittelqualität nach Anspruch 1, **gekennzeichnet durch** ein mehrstufiges Verfahren zur Extraktion von Gelatine oder Gelatinen, das als Teil von Schritt k im Anspruch 1 durchgeführt wird, wobei drei Stufen beteiligt sind: die erste bei 60 °C oder darunter; die zweite bei 80 °C oder darunter, um Lösungen bereitzustellen; und die letzte bei 95 bis 100 °C, um eine Lösung bereitzustellen.

## Revendications

1. Procédé biotechnologique de production de gélatine alimentaire à partir de déchets d'abattage de volaille, notamment des pattes de volaille, comprenant les étapes de séparation des graisses, séparation des protéines non collagènes, prétraitement enzymatique et extraction de la gélatine, séparation de la solution de gélatine et son traitement en gélatine, **caractérisé en ce que** les déchets d'abattage sont traités en étapes successives:
a) rincés à l'eau, ensuite refroidis à une température de 0 à 5 °C ou surgelés à une température de -36±2 °C pour stockage à une température de -20±2 °C;
b) pré-refroidissement ou ajustement de la température de la matière première à une température de -2 à -5 °C au cœur de la matière première;
c) broyage en deux phases de la matière première, dans la 1ère phase en morceaux de taille 20 à 30 mm et dans la 2ème phase en morceaux de taille jusqu'à 3 mm;
d) séparation intensifiée des protéines non collagènes et des pigments de la matière première broyée par lavage avec une solution de NaOH à une concentration de 0,08 à 0,15 % (w/w) en poids et agitation à température ambiante en 3 à 5 cycles pendant 30 à 50 min;
e) séparation ultérieure des graisses par extraction avec un mélange de solvants éthanol + éther de pétrole, mélangés dans un rapport volumique de 1:2 à 2:1, par agitation pendant 72 h max, à température ambiante avec changement du mélange de solvants après 6, 24 et 48 h;
f) prétraitement de l'isolat protéique avec une enzyme protéolytique à une dose de 0,3 à 0,6 % en poids par agitation dans un milieu aqueux à pH neutre 7,5±0,3, à température ambiante pendant 15 à 25 h;
g) filtration de l'hydrolysat protéique et rincés de l'isolat protéique gonflé avec de l'eau;
h) première phase d'extraction de la gélatine: mélange de l'isolat protéique gonflé avec de l'eau dans un rapport pondéral de 1:7 à 1:10 (w/w), extraction proprement à une température de 50 à 60 °C par agitation pendant 40 à 60 min;
i) inactivation des résidus d'enzyme protéolytique par ébullition du mélange pendant 4 à 8 min;
j) séparation de la solution de gélatine du reste de l'isolat protéique non décomposé par filtration;
k) deuxième phase d'extraction de la gélatine - extraction multi-étapes de la gélatine de l'isolat protéique gonflé à une température augmentant à chaque étape dans la plage de 60 à 100 °C;
l) formation de la gélatine à partir des solutions extraites et traitement biotechnologique du reste non décomposé pour la production du collagène hydrolysé;

2. Procédé biotechnologique de production de gélatine alimentaire selon la revendication 1, **caractérisé en ce que** les déchets d'abattage rincés de l'étape (a) ou la matière première broyée de l'étape (c) sont refroidis à une température de 0 à 5 °C pour stockage pendant jusqu'à 36 h.

3. Procédé biotechnologique de production de gélatine alimentaire selon la revendication 1, **caractérisé en ce que** les déchets d'abattage rincés de l'étape (a) ou la matière première broyée de l'étape (c) sont surgelés à une température de -36±2 °C; puis stockés à une température de -20±2 °C pendant jusqu'à 24 mois.

4. Procédé biotechnologique de production de gélatine alimentaire selon la revendication 1, **caractérisé par** l'extraction multi-étapes de la gélatine étape (k) se déroulant en 3 étapes: la 1ère étape se déroule à une température jusqu'à 60 °C, la seconde étape se déroule à une température allant jusqu'à 80 °C pour obtenir de les solutions et la terminale étape se déroulant à une température jusqu'à 95 à 100 °C pour obtenir de la solution.
